# EUROPÄISCHE PATENTSCHRIFT

(11) **EP 1 145 994 B1**
(45) Veröffentlichungstag und Bekanntmachung des Hinweises auf die Patenterteilung: **22.12.2004**
(21) Anmeldenummer: 01107691.6
(22) Anmeldetag: 28.03.2001
(51) Int. Cl.: B65G 39/02

(54) **Rollenantriebseinheit**
Roller-driving unit
Unité d'entraînement pour rouleaux

(30) Priorität: 12.04.2000 DE 10018162
(43) Veröffentlichungstag der Anmeldung: 17.10.2001
(73) Patentinhaber: Telair International GmbH, 83734 Hausham (DE)
(72) Erfinder: Holzner, Richard, 83026 Rosenheim (DE); Michailov, Stefan, 82216 Maisach-Gernlinden (DE); Urch, Matthias, 85586 Poing (DE)
(74) Vertreter: Bohnenberger, Johannes, Dr.

(56) Entgegenhaltungen:
- EP-A- 0 433 529
- EP-A- 0 870 702
- EP-A- 0 939 042
- DE-A- 19 719 160

## Beschreibung

Die Erfindung betrifft eine Rollenantriebseinheit zum Befördern von Gegenständen nach dem Oberbegriff des Patentanspruches 1.

Derartige Rollenantriebseinheiten werden insbesondere zum Transport von Frachtbehältern verwendet, die auf Rollenförderbahnen aufgesetzt sind. Solche Frachbehälter können Frachtcontainer oder Frachtpaletten sein, wobei ein bevorzugtes Anwendungsgebiet der hier gezeigten Rollenantriebseinheit Frachtladesysteme im Luftfrachtverkehr sind, bei denen die Container in den Laderaum eines Flugzeuges hineingefahren und dort verstaut werden. Die Rollenantriebseinheit ist demzufolge im Flugzeug selbst installiert.

Beim Einschalten derartiger Rollenantriebseinheiten werden die dazugehörigen Rollen hochgeschwenkt und zwar derart, daß sie sich an dem Boden eines über ihnen befindlichen Frachtcontainers pressen. Durch diesen Reibschluß kann das Drehmoment der Antriebsrollen auf den Boden der Frachtcontainer übertragen werden, so daß diese weiterbefördert werden.

Aufgrund des Einsatzgebietes tritt nun eine Vielzahl von Problemen bei der Konstruktion derartiger Rollenantriebseinheiten auf. Insbesondere muß nämlich die Antriebsrolle mit einer Kraft gegen den Boden des Containers gepresst werden, welche einen Reibschluß zwischen der Antriebsrolle und dem Boden sicherstellt, der das zur Verfügung stehende Drehmoment der Antriebsrolle in eine Vortriebskraft umwandelt.

Aus der DE 198 07 228 A1 ist eine Rollenantriebseinheit bekannt, bei welcher ein gesonderter Motor vorgesehen ist, um die Antriebsrolle von ihrer unteren Ruhestellung in ihre obere Arbeitsstellung zu heben und einen Reibschluß zum Container sicherzustellen. Diese Anordnung ist aufgrund des dafür zusätzlich benötigten Elektromotors relativ aufwendig.

Ein anderes, bei derartigen Rollenantriebseinheiten gebräuchliches "Prinzip" liegt darin, daß die Anpreßkraft vom Drehmoment des Motors "abgezweigt" wird, so daß kein gesonderter Elektromotor zum Hochheben der Antriebsrolle notwendig ist. Eine derartige Rollenantriebseinheit ist beispielsweise aus der DE 41 02 424 A1 bekannt. Das Anheben der Antriebsrolle erfolgt hierbei über eine Nocke, die mit einem Ausgang eines Planetengetriebes verbunden ist, dessen anderer Ausgang mit der Antriebsrolle in Verbindung steht. Die Antriebsrolle wird über eine ständig (leicht) mitlaufende Bremse abgebremst, so daß ein gewisses Drehmoment auf die Nocke wirkt. Das zum Antrieb eines Gegenstandes auf der Rollenförderbahn zur Verfügung stehende Antriebsmoment wird damit durch die (leicht) mitlaufende Bremse verringert.

Aus der DE 197 19 161 A1 ist eine Rollenantriebseinheit nach dem Oberbegriff des Patentanspruches 1 bekannt. Bei dieser Rollenantriebseinheit ist eine erste steuerbare Bremse zum Abbremsen der Hebenocke und eine zweite steuerbare Bremse zum Blockieren des Motors vorgesehen, so daß die Antriebsrolle insgesamt blockiert werden kann, um einen über ihr befindlichen Container abzubremsen. Auch bei dieser Rollenantriebseinheit ist wieder eine (leicht) mitlaufende Bremse vorgesehen, welche die Antriebsrolle abbremst, um bei ihrem Anheben einen Teil des vom Elektromotor zur Verfügung gestellten Drehmoments der Hebenocke zuzuführen.

Der Erfindung liegt die Aufgabe zugrunde, eine einfach ausgebildete Rollenantriebseinheit der eingangs genannten Art dahingehend weiterzubilden, daß die Anpreßkraft der Antriebsrolle den geforderten Traktionseigenschaften entsprechend verbessert in zuverlässiger Weise einstellbar ist.

Diese Aufgabe wird durch eine Rollenantriebseinheit nach Patentanspruch 1 gelöst.

Durch diese Ausbildung der Rollenantriebseinheit wird es nun mRglich, einerseits die gesamte Antriebskraft zum Hochheben der Rollenantriebseinheit zur Verfügung zu stellen, zum anderen die gesamte Antriebskraft beim angehobenen Zustand der Rollenantriebseinheit zum Vortrieb zu nutzen. Dies ist gerade in Anbetracht der Tatsache besonders wichtig, daß die hier gegenständlichen Rollenantriebseinheiten in einer sehr beengten Umgebung einzubauen sind, in der gleichzeitig eine hohe Zuverlässigkeit gefordert wird.

Vorzugsweise sind die erste und die zweite Bremseinrichtung elektrisch steuerbar, wobei vorzugsweise ein üblicherweise vorhandener Bus hierfür verwendet wird.

Vorzugsweise ist die erste Bremseinrichtung über ein erstes Bremsgetriebe mit der Antriebsrolle verbunden, wodurch das auf die Bremse wirkende Drehmoment entsprechend vermindert werden kann. Dies ermöglicht es, mit einer relativ schwachen Bremse ein hohes Drehmoment exakt gesteuert abzubremsen.

Die erste Bremseinrichtung wirkt auf den Antriebsstrang zwischen dem einen Ausgang des Planetengetriebes und der Antriebsrolle. Sie kann damit an beliebiger Stelle in den Antriebsstrang eingreifen. Bei einer ersten bevorzugten Ausführungsform der Erfindung ist die Bremseinrichtung in der Antriebsrolle eingebaut, was erheblichen Platz spart. Das Bremsgetriebe findet ebenso in der Antriebsrolle Platz und wird vorzugsweise als Planetengetriebe ausgeführt, was der rotationssymmetrischen Ausbildung der Antriebsrolle entspricht.

Die zweite Bremseinrichtung ist vorzugsweise über ein zweites Bremsgetriebe mit der Hebeeinrichtung verbunden. Dadurch können gerade auch an dieser Stelle auftretende relativ hohe Drehmomente mit einer einfachen und leicht gebauten Bremse abgefangen werden.

Die Hebeeinrichtung kann in Form einer Kulisse, einer Spindel oder dergleichen ausgebildet sein. Vorzugsweise umfaßt sie jedoch mindestens eine drehbare Nocke, welche die Antriebsrolle direkt oder über einen Schwenkrahmen, in welchem die Antriebsrolle drehbar befestigt ist, anhebt. Eine derartige Konstruktion ist einfach und kleinbauend.

Die Hebeeinrichtung weist vorzugsweise eine Beaufschlagungseinrichtung zum Zurückholen der Antriebsrolle aus ihrer Arbeitsstellung in ihre Ruhestellung auf, so daß nicht nur die Schwerkraft die Antriebsrolle bei abgeschaltetem Motor nach unten drückt.

Bei einer weiteren Ausführungsform der Erfindung ist eine Federeinrichtung mit Dämpfung an der Hebeeinrichtung vorgesehen, die dazu dient, auch bei blockierter Bremseinrichtung eine gewisse Bewegung der Antriebsrolle zuzulassen, so daß Unebenheiten am Boden des zu befördernden Gegenstandes ausgeglichen werden können.

Die Bremseinrichtungen sind vorzugsweise als schaltbare Bremsen mit einer Blockierstellung und einer Freigabestellung ausgebildet, was zum einen den Aufbau der Bremsen vereinfacht, zum anderen ihren Verschleiß verringert, wobei gleichzeitig das aufnehmbare Drehmoment höher ist als bei Reibungsbremsen.

Nachfolgend wird eine beforzugte Ausführungsform der Erfindung anhand von Abbildungen näher erläutert. Hierbei zeigen
- Fig. 1: eine schematisierte Darstellung einer Ausführungsform der erfindungsgemäßen Rollenantriebseinheit und
- Fig. 2: einen Teil-Horizontalschnitt durch eine Ausführungsform der Rollenantriebseinheit gemäß Fig. 1.

In der nachfolgenden Beschreibung werden für gleiche und gleich wirkende Teile diesselben Bezugsziffern verwendet.

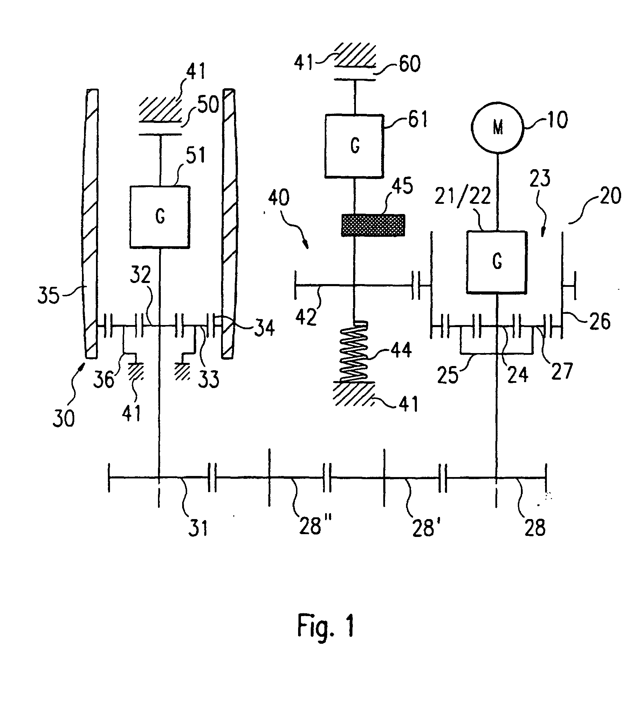

Aus der schematischen Darstellung nach Fig. 1 geht hervor, daß ein Elektromotor 10 über ein Getriebe 21/22 mit einem Sonnenrad 24 verbunden ist, das einen Getriebeeingang eines Planetengetriebes 20 bildet. Mit dem Sonnenrad 24 kämmen Planetenräder 27, die auf einem Planetenträger 25 drehbar sitzen, der einen ersten Getriebeausgang des Planetengetriebes 20 bildet. Die Planetenräder 27 kämmen weiterhin mit einem Hohlrad 26 das einen zweiten Getriebeausgang des Planetengetriebes 20 bildet.

Der Planetenträger 25 steht über Transmissionsräder 28, 28', 28" mit einem Antriebsritzel 31 einer Antriebsrolle 30 in Verbindung. In einem Mantel 35, der einen rutschfesten Außenbelag aufweist, ist ein Sonnenrad 32 eines Untersetzungsgetriebes vorgesehen, daß mit dem Antriebsritzel 31 drehfest verbunden ist. Auf dem Sonnenrad 32 laufen Planetenräder 33, welche auf einem Planetenträger 36 sitzen, der mit einem Schwenkrahmen 41 verbunden ist, welcher hier nur als "ortsfeste Verbindung" schematisiert dargestellt ist. Die Planetenräder 33 kämmen weiterhin mit einem Hohlrad 34, welches mit dem Mantel 35 drehfest verbunden ist, so daß eine Drehung des Antriebsritzels 31 über das Sonnenrad 32, die Planetenräder 33 und das Hohlrad 34 auf den Mantel 35 übertragen wird.

Das Sonnenrad 32 steht weiterhin über ein erstes Bremsgetriebe 51 mit einer elektrisch steuerbaren Bremseinrichtung 50 in Verbindung, so daß bei Einrücken der Bremse 51 das Sonnenrad 32 mit dem Schwenkrahmen 41 drehfest verbunden ist, so daß die Antriebsrolle 30 insgesamt blockiert wird.

Auf der Außenseite des Hohlrades 26 des Planetengetriebes 20 ist eine Verzahnung angebracht, welche mit einem Antriebsritzel 42 einer Hebeeinrichtung 40 kämmt. Die Hebeeinrichtung 40 weist eine in dem Schwenkrahmen 41 drehbar gelagerte Hebenocke 45 auf, welche weiterhin über ein zweites Bremsgetriebe 61 mit einer Bremseinrichtung 60 verbunden ist, über welche die Hebenocke 45 mit dem Schwenkrahmen 41 drehfest verbunden werden kann, wenn die Bremse 61 eingerückt wird.

Zum Start der Rollenantriebseinheit, wenn sich also die Antriebsrolle 30 in ihrer unteren Ruhestellung befindet, wird die erste Bremseinrichtung 50 eingerückt während die zweite Bremseinrichtung 60 ausgerückt ist. Nachdem die Antriebsrolle 30 und damit der erste Getriebeausgang nämlich der Planetenträger 25 auf diese Weise blockiert sind, wirkt das gesamte, vom Elektromotor 10 aufgebrachte Drehmoment auf die Hebenocke 45, so daß der (an sich bekannte und darum hier nicht gezeigte) Schwenkrahmen 41 mit samt der Antriebsrolle 30 in die Arbeitsstellung hochgeschwenkt wird. Hierbei wird eine Rückholfeder 44 gespannt, die zwischen dem Schwenkrahmen 41 und der Hebenocke 45 sitzt.

Sobald eine gewünschte Betriebsstellung erreicht ist, wird die zweite Bremseinrichtung 60 eingerückt, so daß die Hebenocke 45 nunmehr blockiert ist und die Antriebsrolle 30 in ihrer Position hält. Gleichzeitig (gegebenenfalls etwas vorher) wird die erste Bremseinrichtung 50 ausgerückt, so daß nunmehr das volle Antriebsmoment des Elektromotors 10 über die zwischengeschalteten Getriebeeinheiten auf die Antriebsrolle 30 wirkt und deren Mantel 35 in Drehung versetzt, um einen Container anzutreiben. Wird der Elektromotor 10 abgeschaltet, so bleibt zunächst die Antriebsrolle 30 noch in ihrer hochgehobenen Position und zwar so lange, bis die zweite Bremseinrichtung 60 ausgerückt wird. Dann bewegt die Rückholfeder 44 die Hebenocke 45 wieder in die Position zurück, in welcher die Antriebsrolle 30 in ihrer Ruhestellung liegt.

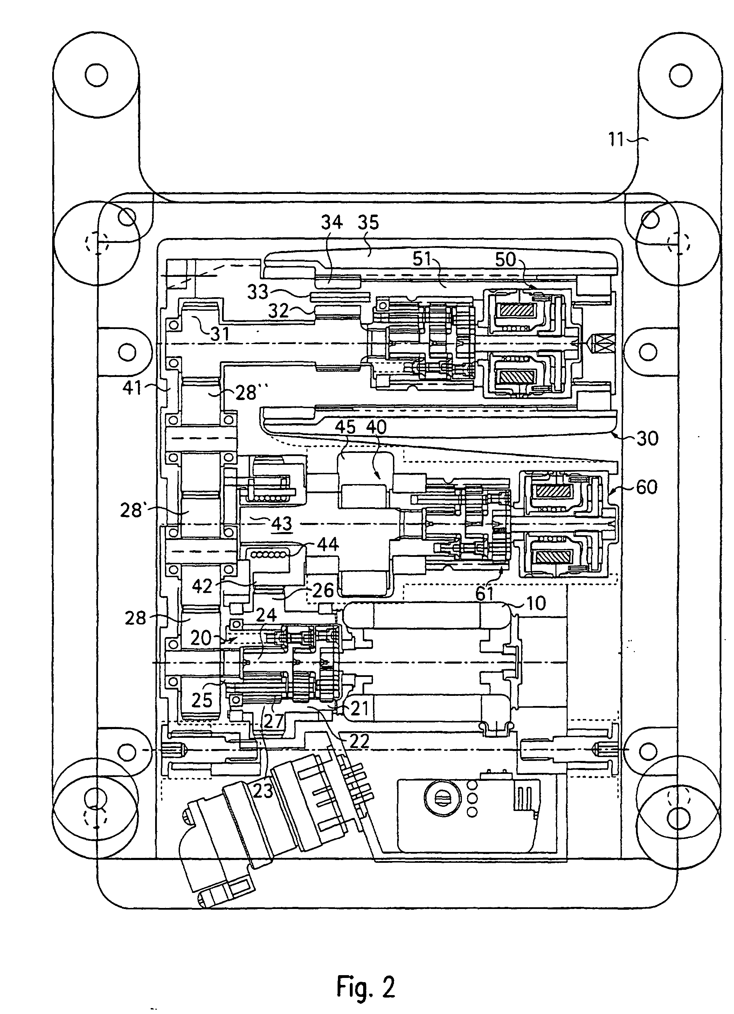

Eine tatsächliche Konstruktion, wie sie in Fig. 2 gezeigt ist, umfaßt einen Montagerahmen 11, in welchem der Schwenkrahmen 41 hochschwenkbar angeordnet ist.

Der Elektromotor 10 ist über eine erste Getriebestufe 21 und eine zweite Getriebestufe 22 (jeweils Planetengetriebe) mit dem Sonnenrad 24 einer dritten Getriebestufe 23 drehfest verbunden. Auf dem Sonnenrad 24 laufen Planetenräder 27, die auf einem Planetenträger 25 drehbar sitzen und gleichzeitig mit einem Hohlrad 26 kämmen, wobei der Planetenträger 25 den ersten Getriebeausgang und das Hohlrad 26 den zweiten Getriebeausgang des Planetengetriebes 20 bilden.

Der Planetenträger 25 ist über Transmissionsräder 28, 28', 28" mit einem Antriebsritzel 31 einer Antriebsrolle 30 verbunden, die über Lager drehbar im Schwenkrahmen 41 angeordnet ist. Das Antriebsritzel 31 sitzt auf einer Welle mit einem Sonnenrad 32, das mit Planetenrädern 33 kämmt, die wiederum mit einem Hohlrad 34 kämmen, welches in einem Mantel 35 der Antriebsrolle 30 sitzt. Die Planetenräder 33 sitzen auf einem Planetenträger 36, der mit dem Schwenkrahmen 41 drehfest verbunden ist.

Auf der selben Welle wie das Sonnenrad 32 sitzt ein Eingang eines ersten Bremsgetriebes 51, dessen Ausgang am Eingang einer elektromagnetischen Bremse befestigt ist. Beim Einrücken der Bremse 50 wird damit das Sonnenrad 33, die Antriebsrolle 30 also insgesamt gegenüber dem Schwenkrahmen 41 gesperrt.

Das Hohlrad 26, welches den zweiten Getriebeausgang des Planetengetriebes 20 bildet, weist an seiner Außenfläche eine Verzahnung auf, mit welcher ein Antriebsritzel 42 eine Hebeeinrichtung 40 kämmt. Dieses Antriebsritzel 42 sitzt auf einer Welle 43, auf welcher eine Hebenocke 45 drehfest sitzt und die sich weiter in ein zweites Bremsgetriebe 61 erstreckt, dessen Ausgang mit einer zweiten Bremseinrichtung 60 verbunden ist. Dann, wenn die zweite Bremseinrichtung 60 eingerückt ist, wird die Hebenocke 45 gegenüber dem Schwenkrahmen 41 gesperrt.

Weiterhin ist zwischen der Welle 43 und dem Schwenkrahmen 41 eine Rückholfeder 44 vorgesehen, welche die Hebenocke 45 in ihre Ruhestellung derart vorspannt, daß die Hebenocke 45 bei angehobener Antriebsrolle 30 und Abschalten des Motors 10 so verdreht wird, daß die Antriebsrolle 30 in ihre Ruhestellung zurück sinkt. Das Nocken-Hebe Prinzip ist an sich aus dem Eingangs genannten Stand der Technik hinreichend bekannt, so daß keine weiteren Erläuterungen gegeben werden müssen.

An dieser Stelle sei noch ausdrücklich darauf hingewiesen, daß die Anordnung der Bremseinrichtungen 50 und 60 innerhalb der Antriebsrolle 30 bzw. koachsial zur Hebenocke 45 lediglich bevorzugte Ausführungsformen der Erfindung darstellen. Es ist auch möglich, an anderen Stellen der beiden Getriebezüge zwischen dem ersten und dem zweiten Getriebeausgang und der Antriebsrolle bzw. der Hebenocke entsprechende Bremsen vorzusehen.

### Bezugszeichenliste

- 10: Antriebsmotor
- 11: Montagerahmen
- 20: Planetengetriebe
- 21: Erste Getriebestufe
- 22: Zweite Getriebestufe
- 23: Dritte Getriebestufe
- 24: Getriebeeingang (Sonnenrad)
- 25: Planetenträger (erster Getriebeausgang)
- 26: Hohlrad (zweiter Getriebeausgang)
- 27: Planetenrad
- 28, 28', 28'': Transmissionsrad
- 30: Antriebsrolle
- 31: Antriebsritzel
- 32: Sonnenrad
- 33: Planetenrad
- 34: Hohlrad
- 35: Mantel
- 36: Planetenträger
- 40: Hebeeinrichtung
- 41: Schwenkrahmen
- 42: Antriebsritzel
- 43: Welle
- 44: Rückholfeder
- 45: Hebenocke
- 50: erste Bremseinrichtung
- 51: erstes Bremsgetriebe
- 60: zweite Bremseinrichtung
- 61: zweites Bremsgetriebe

## Patentansprüche

1. Rollenantriebseinheit zum Befördern von Gegenständen, insbesondere von Frachtcontainern auf einer Rollenförderbahn eines Flugzeuges, umfassend
- einen Antriebsmotor (10),
- ein Planetengetriebe (20) mit einem mit dem Antriebsmotor (10) verbundenen Getriebeeingang (24) und mit einem ersten Getriebeausgang (25) und einem zweiten Getriebeausgang (26),
- eine an einem Schwenkrahmen (41) gelagerte Antriebsrolle (30) zum Antreiben des Gegenstandes, die mit dem ersten Getriebeausgang (25) verbunden ist,
- eine Hebeeinrichtung (40) die mit dem zweiten Getriebeausgang (26) verbunden ist, zum Anheben der Antriebsrolle (30) aus einer abgesenkten Ruhestellung, in der die Antriebsrolle außer Eingriff mit dem Gegenstand ist, in eine angehobene Arbeitsstellung, in der die Antriebsrolle (30) in Eingriff mit dem Gegenstand ist,
- eine erste Bremseinrichtung (50) zum Abbremsen der Antriebsrolle (30) derart, dass der erste Getriebeausgang (25) zum Erzeugen eines Drehmomentes am zweiten Getriebeausgang (26) und zum Anheben der Antriebsrolle (30) abgebremst wird, und
- eine zweite als steuerbare Bremse ausgebildete Bremseinrichtung (60) zum Festhalten der Hebeeinrichtung (40)
**dadurch gekennzeichnet, dass**
die erste Bremseinrichtung (50) derart als steuerbare Bremse ausgebildet ist, dass die Antriebsrolle (30) gegenüber dem Schwenkrahmen (41) blockierbar ist.

2. Rollenantriebseinheit nach Anspruch 1,
**dadurch gekennzeichnet, daß** die erste und die zweite Bremseinrichtung (50, 60) elektrisch steuerbar sind.

3. Rollenantriebseinheit nach einem der vorhergehenden Ansprüche,
**dadurch gekennzeichnet, daß** die erste Bremseinrichtung (50) über ein erstes Bremsgetriebe (51) mit der Antriebsrolle (30) zur Verringerung des auf die Bremseinrichtung (50) wirkenden Drehmomentes verbunden ist.

4. Rollenantriebseinheit nach Anspruch 3,
**dadurch gekennzeichnet, daß** die erste Bremseinrichtung (50) und/oder das erste Bremsgetriebe (51) in der Antriebsrolle (30) eingebaut sind.

5. Rollenantriebseinheit nach einem der vorherigen Ansprüche,
**dadurch gekennzeichnet, daß** die zweite Bremseinrichtung (60) über ein zweites Bremsgetriebe (61) mit der Hebeeinrichtung (40) verbunden ist.

6. Rollenantriebseinheit nach einem der vorherigen Ansprüche,
**dadurch gekennzeichnet, daß** die Hebeeinrichtung (40) mindestens eine drehbare Hebenocke (45) umaßt, welche die Antriebsrolle (30) direkt oder über einen Schwenkrahmen (41), in welchem die Antriebsrolle (30) drehbar befestigt ist, anhebt.

7. Rollenantriebseinheit nach einem der vorherigen Ansprüche,
**dadurch gekennzeichnet, daß** die Hebeeinrichtung (40) eine Rückholbeaufschlagungseinrichtung (44) zum Absenken der Antriebsrolle (30) aus der Arbeits- in die Ruhestellung umfaßt.

8. Rollenantriebseinheit nach einem der vorhergehenden Ansprüche,
**dadurch gekennzeichnet, daß** die erste und/oder die zweite Bremseinrichtung (50, 60) als schaltbare Bremsen mit einer Blockierstellung und einer Freigabestellung ausgebildet sind.

## Claims

1. A drive roller unit for conveying articles, in particular freight containers on a roller conveyor of an aircraft, comprising
- a drive motor (10),
- a planet gearing (20) with a gear input (24) connected to the drive motor (10) and with a first gear output (25) and a second gear output (26),
- a drive roller (30) mounted on a pivot frame (41), which roller is intended to drive the article and which is connected to the first gear output (25),
- a lifting means (40) which is connected to the second gear output (26) to raise the drive roller (30) from a lowered rest position, in which the drive roller is disengaged from the article, into a raised operative position in which the drive roller (30) is in engagement with the article,
- a first braking device (50) for retarding the drive roller (30) so that the first gear output (25) is retarded so as to generate a torque at the second gear output (26) and so as to raise the drive roller (30), and
- a second braking device (60) in the form of a
controllable brake for arresting the lifting means (40) **characterised in that**
the first braking device (50) is designed to be a controllable brake so that the drive roller (30) can be locked with respect to the pivot frame (41).

2. A drive roller unit according to Claim 1, **characterised in that** the first and second braking devices (50,60) can be controlled electrically.

3. A drive roller unit according to either one of the preceding Claims, **characterised in that** the first braking device (50) is connected to the drive roller (30) via a first brake gear (51) so as to reduce the torque acting on the braking device (50).

4. A drive roller unit according to Claim 3, **characterised in that** the first braking device (50) and/or the first brake gear (51) is incorporated in the drive roller (30).

5. A drive roller unit according to any one of the preceding Claims, **characterised in that** the second braking device (60) is connected to the lifting means (40) via a second brake gear (61)

6. A drive roller unit according to any one of the preceding Claims, **characterised in that** lifting means (40) comprises at least one rotatable lifting cam (45) which raised the drive roller (30) directly or via a pivot frame (41) in which the drive roller (30) is rotatably mounted.

7. A drive roller unit according to any one of the preceding Claims, **characterised in that** lifting means (40) comprises a return actuating device (44) for lowering the drive roller (30) from the operative position into the rest position.

8. A drive roller unit according to any one of the preceding Claims, **characterised in that** the first and/or the second braking devices (50,60) are in the form of controllable brakes with a locking position and a release position.

## Revendications

1. Unité d'entraînement à rouleaux pour le transport d'objets, en particulier de conteneurs à fret sur un transporteur à rouleaux d'un avion, comprenant
- un moteur d'entraînement (10),
- un train planétaire (20) comportant une entrée de train (24) reliée au moteur d'entraînement (10) et comportant une première sortie de train (25) et une seconde sortie de train (26),
- un rouleau moteur (30) monté sur un cadre pivotant (41) pour l'entraînement de l'objet, qui est relié à la première sortie de train (25),
- un dispositif de levage (40) qui est relié à la seconde sortie de train (26) pour le relevage du rouleau moteur (30) d'une position de repos abaissée,
dans laquelle le rouleau moteur est hors de prise avec l'objet, dans une position de travail relevée, dans laquelle le rouleau moteur (30) est en prise avec l'objet,
- un premier dispositif de freinage (50) pour freiner le rouleau moteur (30) de telle sorte que la première sortie de train (25) est freinée pour produire un couple sur la seconde sortie de train (26) et pour relever le rouleau moteur (30), et
- un second dispositif de freinage (60) réalisé sous forme de frein commandé pour maintenir le dispositif de levage (40),
**caractérisée en ce que** le premier dispositif de freinage (50) est réalisé sous forme de frein commandé de telle sorte que le rouleau moteur (30) peut être bloqué par rapport au cadre pivotant (41).

2. Unité d'entraînement à rouleaux suivant la revendication 1, **caractérisée en ce que** le premier et le second dispositifs de freinage (50, 60) sont à commande électrique.

3. Unité d'entraînement à rouleaux suivant l'une des revendications précédentes, **caractérisée en ce que** le premier dispositif de freinage (50) est relié au rouleau moteur (30) par l'intermédiaire d'une première transmission de frein (51) pour réduire le couple agissant sur le dispositif de freinage (50).

4. Unité d'entraînement à rouleaux suivant la revendication 3, **caractérisée en ce que** le premier dispositif de freinage (50) et/ou la première transmission de frein (51) sont intégrés dans le rouleau moteur (30).

5. Unité d'entraînement à rouleaux suivant l'une des revendications précédentes, **caractérisée en ce que** le second dispositif de freinage (60) est relié au dispositif de levage (40) par l'intermédiaire d'une seconde transmission de frein (61).

6. Unité d'entraînement à rouleaux suivant l'une des revendications précédentes, **caractérisée en ce que** le dispositif de levage (40) comprend au moins une came de levage (45) rotative, qui relève le rouleau moteur (30) directement ou par l'intermédiaire d'un cadre pivotant (41) dans lequel est fixé tournant le rouleau moteur (30).

7. Unité d'entraînement à rouleaux suivant l'une des revendications précédentes, **caractérisée en ce que** le dispositif de levage (40) comprend un dispositif de rappel (44) pour l'abaissement du rouleau moteur (30) de la position de travail dans la position de repos.

8. Unité d'entraînement à rouleaux suivant l'une des revendications précédentes, **caractérisée en ce que** le premier et/ou le second dispositif de freinage (50, 60) sont réalisés sous forme de freins commutables ayant une position de blocage et une position de dégagement.
